# EUROPEAN PATENT APPLICATION

(11) **EP 4 723 012 A1**
(43) Date of publication of application: **08.04.2026**
(21) Application number: 24204388.3
(22) Date of filing: 02.10.2024
(51) Int. Cl.: G06Q 20/02, G06Q 20/06, G06Q 20/22

(54) **PEER-TO-PEER PAYMENT SYSTEM**

(71) Applicant: MasterCard International Incorporated, Purchase, NY 10577 (US)
(72) Inventor: Radu, Cristian, 1320 Beauvechain (BE); Gallo, Francesco, 8045 Graz (IT); Oliveira, Hugo, Lisbon (PT)
(74) Representative: Barker Brettell LLP

(57) **Abstract**

The present invention relates to a computer implemented method 600 of effecting peer to peer payments between a payer account and a payee account. The method comprises receiving 601, from a payee device at a payer device associated with a payer account, a payment request message indicating a transaction amount, where the payer account includes tokens corresponding to a monetary value, and sending 603, from the payer device to the payee device, a message including one or more of the tokens together corresponding to a monetary value equal to the transaction amount. At a later point in time, the payer device connects 605 to a blockchain network server and sends 607 a message to record the sending of the one or more of the tokens on a blockchain ledger maintained by the blockchain network server.

## Description

### Field

The present invention relates to methods and systems of effecting peer to peer payments between a payer account and a payee account. In particular, the method and systems allow for a payer device to send a message comprising one or more tokens corresponding to monetary value to a payee device when offline from a blockchain network.

### Background

Peer-to-peer (P2P) transactions are fund transfers made from one user to another through an intermediary, typically referred to as a P2P payment application or platform. P2P payments may be typically sent and received via mobile devices with access to the internet. Each user's account involved in the P2P payment application may be linked to a bank account maintained by a financial institution. When a transaction occurs, the money used in the transaction may be sent or debited directly to/from each user's bank account.

However, the current methods of effecting a P2P payment may be computationally inefficient. P2P transactions rely on messages and funds being sent between the P2P platform and the user's individual banks. This is especially inefficient and costly when micro-payments are being made using the P2P platforms, given as fees have to be paid to the P2P platform and/or each of the banks involved in the transactions. Current P2P platforms and transaction may also be susceptible to fraud. Malicious entities may use P2P payment platform to steal funds, by for example from taking log-in credentials (using techniques such as phishing attacks) on un-verified devices. Furthermore, current P2P transactions require the mobile devices used in the transaction to be connected to the internet and carrying out transactions offline from a network may not be possible.

These problems may substantially reduce the computational efficiency of the P2P transaction process and further affect the security of a user in using the P2P payment platforms. The present invention sets out to alleviate these problems relating to computational inefficiencies and security.

### Summary of Invention

According to an aspect of the present invention there is provided a computer implemented method of effecting peer to peer payments between a payer account and a payee account, the method comprising: receiving, from a payee device, at a payer device associated with a payer account, a payment request message, said payment request message indicating a transaction amount, wherein the payer account comprises tokens corresponding to a monetary value; sending, from the payer device to the payee device, a message comprising one or more of the tokens, the one or more of the tokens together corresponding to a monetary value equal to the transaction amount, and wherein the one or more of the tokens are sent to the payee device to be stored in a payee account associated with the payee device; at a later point in time with respect to a time of sending the message comprising the one or more of the tokens, connecting, the payer device, to a blockchain network server; and sending, from the payer device to the blockchain network server, a message to record the sending of the one or more of the tokens on a blockchain ledger maintained by the blockchain network server.

Advantageously, this allows for a payer device to efficiently transfer funds to a payee device offline from the blockchain network. The payer account includes tokens that correspond to a monetary value, which allows for the payer device to send all or some of these tokens to the payee device such that they can be stored in the payee account. Therefore, an issuer and acquirer are not directly required when performing the offline transaction, as only tokens are used between the two accounts.

This method allows a payer to securely complete a transfer of funds directly to a payee by using tokens issued by a token service provider and a blockchain ledger to record the transactions. The use of tokens corresponding to a monetary value and the blockchain ledger allows the payer to easily transfer any amount of funds to the payee, such as a micro-payment amount, without having to pay large fees to each of the payment network, issuing and acquirer entities, as is the case with a usual account to account or peer to peer payment. Further, the use of the blockchain ledger ensures that the payments are transferred securely offline between the payer and payee devices, as the devices will then consolidate their accounts on the blockchain ledger after reconnecting to the blockchain network. Any tampering with the token transfers can then be determined if the records on the blockchain are inconsistent.

Preferably, the tokens may be a virtual representation of funds, wherein the value of the funds is equal to the monetary value of the tokens. Each token is only representative of a monetary value and is not the monetary value itself, therefore the tokens cannot be used outside of the payee account and payer account in the peer-to-peer payment method, in for example, other peer-to-peer payment systems or any other type of payment system..

The blockchain ledger is a ledger maintained by the blockchain network of all the transactions that have occurred between the payee device and payer device, and thus between the payer account and payee account. The blockchain network may be a private blockchain network maintaining a private blockchain ledger. The payee device and the payer device may be offline from the blockchain network when they are not connected to the blockchain network.

Preferably, the tokens may be a plurality of tokens and the method may further comprise: prior to connecting the payer device to the server: receiving, at the payer device from the payee device, a further payment request including a further transaction amount; and sending, from the payer device to the payee device, a further message comprising a further one or more of the tokens, the further one or more of the tokens together corresponding to a monetary value equal to the further transaction amount, and wherein the further one or more of the tokens are sent to the payee device to be stored in the payee account; and after connecting the payer device to the server: sending, from the payer device to the blockchain network server, a message to record the sending of the further one or more of the tokens on the blockchain ledger maintained by the blockchain network server.

In this way, a plurality of transfers of one or more tokens between payer and payee account can occur before the payer device is connected to the blockchain network. This allows for the payer and payee device to engage in multiple transactions offline from the blockchain network before having to connect to the server maintaining the network in order to record all the transfers that have occurred on the blockchain ledger. Alternatively, the payer device may send to the payee device a message comprising a fraction of a token, the fraction of a token corresponding to the monetary value equal to either the transaction amount or further transaction amount.

Preferably, the method may further comprise: determining, at the payer device, a balance of the tokens in the payer account after the sending, from the payer device to the payee device, of the message comprising the one or more of the tokens; and after connecting the payer device to the server: sending, from the payer device to the blockchain network server, a message to record, on the blockchain ledger maintained by the blockchain network server, the balance of the tokens in the payer account after the sending of the message comprising the one or more of the tokens.

In this way, the balance of tokens in the payer account is recorded and consolidated with the blockchain ledger. This ensures that the one or more tokens said to have been sent from the payer device to the payee device have actually been sent whilst the devices were offline from the blockchain network. This ensures no double spending of the same one or more tokens.

Preferably, the method may further comprise: sending, from the payer device to a token service provider, a request for the tokens corresponding to the monetary value; receiving, at the payer device from the token service provider, the tokens corresponding to the monetary value, wherein the tokens are deposited into the payer account; and sending, from the payer device to the blockchain network server, a message to record the receiving of the tokens from the token service provider on the blockchain ledger maintained by the blockchain network server.

Advantageously, this allows a token service provider to issue the tokens corresponding to monetary value directly to the payer device. The steps of sending the request for the tokens, receiving the tokens and sending to the blockchain network server a message to record the receiving of the tokens may all occur prior to the step of receiving the payment request message and sending the message comprising the one or more tokens.

The method may further comprise: sending, from the payee device to a token service provider, a request for the tokens corresponding to the monetary value; receiving, at the payee device from the token service provider, the tokens corresponding to the monetary value, wherein the tokens are deposited into the payee account; and sending, from the payee device to the blockchain network server, a message to record the receiving of the tokens from the token service provider on the blockchain ledger maintained by the blockchain network server

Preferably, the request for the tokens corresponding to the monetary value may be configured to be sent to an issuing bank associated with the payer device, and the tokens received at the payer device from the token service provider may be received by the token service provider from the issuing bank.

In this way, only the token service provider is required to be in communication with an issuing bank. Therefore, in requesting the tokens, the payer device is only required to communicate with the token service provider which issues all the tokens. The payer device is then able to use the tokens and make peer to peer transfers to the payee device without having to necessarily directly involve any issuer or acquiring bank. This increases the efficiency of transactions and ensures that less computational resources are used e.g. messages between issuer and payer device are not required each time the payer device wants to receive tokens to make a transaction.

Preferably, the method may further comprise: sending, from the payer device to a token service provider, a request to convert one or more of the tokens into their corresponding monetary value, and a message comprising the one or more of the tokens to be converted into their corresponding monetary value; and receiving, at the payer device from the token service provider, funds for depositing into a payer bank account maintained by an issuing bank, wherein an amount of the currency received is equal to the monetary value of the one or more of the tokens sent to the token service provider to be converted.

In this way, the payer device may receive funds for depositing into a bank account in exchange for one or more tokens held in the payer account. This allows for the payer device to easily and efficiently use tokens in transacting with the payee device in peer-to-peer transactions and to convert the tokens into their corresponding monetary value using the token service provider. The payer device does not have to directly communicate with the issuing bank, in order to receive currency corresponding to the tokens held within the payer account. The funds received at the payer device for depositing into a payer bank account maintained by an issuing bank may be any type of fund, for example, fiat money i.e., currency or cryptocurrency.

The method may further comprise: sending, from the payee device to a token service provider, a request to convert one or more of tokens into their corresponding monetary value, and a message comprising the one or more of the tokens to be converted into their corresponding monetary value; and receiving, at the payee device from the token service provider, funds for depositing into a payee bank account maintained by an issuing bank, wherein an amount of the currency received is equal to the monetary value of the one or more of the tokens sent to the token service provider to be converted.

Preferably, the request to convert the one or more of the tokens into their corresponding monetary value may be configured to be sent to an issuing bank associated with the payer device, and the currency received at the payer device by the token service provider may be received by the token service provider from the issuing bank.

In this way, only the token service provider is required to be in communication with an issuing bank. Therefore, in requesting the tokens to be converted into currency, the payer device is only required to communicate with the token service provider which issues the currency. The payer device is then able to use tokens and make peer-to-peer transfers and convert any remaining tokens (or any number of tokens prior to making the peer-to-peer transactions) into currency corresponding to their monetary value without having to directly involve any issuer (or acquiring) bank. This increases the efficiency of transactions and ensures that less computational resources are used e.g. messages between issuer and payer device are not required each time the payer device wants to convert tokens into their monetary value.

Preferably, the method may further comprise: receiving, at the payer device, an authentication message, wherein the authentication message verifies an identity of payer device. This ensures that the payer device used in the peer-to-peer transaction is authenticated. This increases the security of the transaction and ensures no un-verified devices are able to send and/or receive tokens using the peer-to-peer payment method. The method may further comprise sending, from the payer device to an authentication server, an authentication request, and receiving, at the payer device, the authentication

Preferably, the tokens may be a plurality of tokens, the payer account may be a first payer account stored on the payer device, the payee account may be a first payee account stored on the payee device, and the method may further comprise: connecting, the payer device, to the blockchain network server; receiving, at the payer device from the payee device, an additional payment request message, said additional payment request message indicating an additional transaction amount; sending, from the payer device to the payee device, an additional message comprising an additional one or more of the tokens, the additional one or more of the tokens together corresponding to a monetary value equal to the additional transaction amount, and wherein the additional one or more of the tokens are sent from a second payer account stored by a payment network provider to the payee device, to be stored in a second payee account stored by the payment network provider, and wherein the second payer account is associated with the first payer account and the second payee account is associated with the first payee account; and sending, from the payer device to the blockchain network server, a message to record the sending of the additional one or more of the tokens on the blockchain ledger maintained by the blockchain network server.

In this way, the payer device may already be online and connected to the blockchain network whilst making an additional transfer of tokens. This allows for the payer device to either be offline or online from the blockchain network when making a peer-to-peer transfer of the tokens to the payee device. The method further allows the payer device to use a second payer account corresponding to the first payer account, with the second payer account being maintained by the payment network provider in making the online transaction, rather than the first payer account which is only stored on the payer device. The sending, from the payer device to the blockchain network server, a message to record the sending of the additional one or more of the tokens on the blockchain ledger may occur instantaneously with the step of sending, from the payer device to the payee device, an additional message comprising an additional one or more of the tokens.

The second payer account may be associated with the first payer account in the way that the second payer account is a main account maintained by the payment network provider and the first payer account is a sub-account corresponding to the main account and stored locally on the payer device. The second payee account may be associated with the first payee account in the way that the second payee account is a main account maintained by the payment network provider and the first payer account is a sub-account corresponding to the main account and stored locally on the payer device.

Preferably, the payee device may be associated with a merchant and the payer device may be associated with a customer of the merchant. This allows for a customer to utilize the peer-to-peer payment method and blockchain network to efficiently and securely pay a merchant for goods and services.

Preferably, the monetary value of the tokens in the payer account may be based on a predetermined scaling factor. Advantageously, this allows for the monetary value of the tokens to change depending on a predetermined scaling factor. Therefore, if the monetary value of each token is required to be small, such as for a micro-payment transfer, the scaling factor may be predetermined to be relatively small, such that each token represents a small amount of currency. Whereas if the value of each token is required to be large for larger types of transfers, the scaling factor may be predetermined to be relatively large, such that each token represents a large amount of currency.

The scaling factor may be based on a category of the merchant. For example, the category of merchant may be ecommerce, retail, wholesale or online platforms offering services such as data driven platforms (DDP).

Preferably, the method may further comprise: sending, from the payer device to a token service provider, a request for an access token; receiving, at the payer device from the token service provider, a message comprising the access token, wherein the access token permits the payer device to send, to the payee device, the message comprising the one or more of the tokens corresponding to monetary value.

The access token therefore gives access to the payer device to be able to perform peer to peer payments using the peer-to-peer payment method, by sending tokens corresponding to monetary value to the payee device. In the case where the payee is a merchant and the payer is a customer of the merchant, the access token may also give access to the customer to access a service provided by the merchant.

Preferably, the receiving, at the payer device from the token service provider, of the access token may be based on a predetermined factor of a payer associated with the payer device. This allows for only payers using their payer device with good reputations to be given access to hold the tokens within their payer account and to use the peer-to-peer payment method.

According to a further aspect of the present invention there is provided a computer implemented method of effecting peer to peer payments between a payer account and a payee account, the method comprising: sending, from a payee device to a payer device associated with a payer account, a payment request message, said payment request message indicating a transaction amount, wherein the payer account comprises tokens corresponding to a monetary value; receiving, at the payee device from the payer device, a message comprising one or more of the tokens, the one or more of the tokens together corresponding to a monetary value equal to the transaction amount, and wherein the one or more of the tokens are received at the payee device to be stored in a payee account associated with the payee device; at a later point in time with respect to a time of receiving the message comprising the one or more of the tokens, connecting, the payee device, to a blockchain network server; and sending, from the payee device to the server, a message to record the receiving of the one or more of the tokens on a blockchain ledger maintained by the blockchain network server.

According to a further aspect of the present invention there is provided a payer device for effecting peer to peer payments between a payer account and a payee account, the payer device comprising a processor configured to: receive, from a payee device, a payment request message, said payment request message indicating a transaction amount, wherein a payer account associated with the payer device comprises tokens corresponding to a monetary value; send, to the payee device, a message comprising one or more of the tokens, the one or more of the tokens together corresponding to a monetary value equal to the transaction amount, and wherein the one or more of the tokens are sent to the payee device to be stored in a payee account associated with the payee device; at a later point in time with respect to a time of sending the message comprising the one or more of the tokens, connect to a blockchain network server; and send, to the server, a message to record the sending of the one or more of the tokens on a blockchain ledger maintained by the blockchain network server.

According to a further aspect of the present invention there is provided a payee device for effecting peer to peer payments between a payer account and a payee account, the payee device comprising a processor configured to: send, to a payer device associated with a payer account, a payment request message, said payment request message indicating a transaction amount, wherein the payer account comprises tokens corresponding to a monetary value; receive, from the payer device, a message comprising one or more of the tokens, the one or more of the tokens together corresponding to a monetary value equal to the transaction amount, and wherein the one or more of the tokens are received at the payee device to be stored in a payee account associated with the payee device; at a later point in time with respect to a time of receiving the message comprising the one or more of the tokens, connect to a blockchain network server; and send, to the server, a message to record the receiving of the one or more of the tokens on a blockchain ledger maintained by the blockchain network server.

According to a further aspect of the present invention there is provided a system for effecting peer to peer payments between a payer account and a payee account, the system comprising the payer device and the payee device, and configured to perform the steps of: receiving, from a payee device, at a payer device associated with a payer account, a payment request message, said payment request message indicating a transaction amount, wherein the payer account comprises tokens corresponding to a monetary value; sending, from the payer device to the payee device, a message comprising one or more of the tokens, the one or more of the tokens together corresponding to a monetary value equal to the transaction amount, and wherein the one or more of the tokens are sent to the payee device to be stored in a payee account associated with the payee device; at a later point in time with respect to a time of sending the message comprising the one or more of the tokens, connecting, the payer device, to a blockchain network server; and sending, from the payer device to the blockchain network server, a message to record the sending of the one or more of the tokens on a blockchain ledger maintained by the blockchain network server.

### Description of Figures

Figure 1 shows a system architecture diagram of a system 100 for effecting a peer-to-peer payment according to the present disclosure;
Figure 2 shows a message flow diagram of a message sequence 200 for issuing tokens in the peer-to-peer payment system shown in Figure 1;
Figure 3 shows a message flow diagram of a message sequence 300 for converting tokens into funds within the peer-to-peer payment system shown in Figure 1;
Figure 4 shows a message flow diagram of a message sequence 400 for effecting an offline payment using the peer-to-peer payment system shown in Figure 1;
Figure 5 shows a message flow diagram of a message sequence 500 for effecting an online payment using the peer-to-peer payment system shown in Figure 1;
Figure 6 shows a flow diagram illustrating method steps of a computer implemented method of effecting peer to peer payments between a payer account and a payee account;
Figure 7 shows a flow diagram illustrating method steps of a computer implemented method of effecting peer to peer payments between a payer account and a payee account; and
Figure 8 shows a data processing device, according to the present disclosure.

### Detailed Description

The present invention relates to a system and method of effecting peer-to-peer (P2P) payments between a payer account and a payee account. The methods and systems allow payers and payees to transact with one another using a secure and efficient P2P payment system.

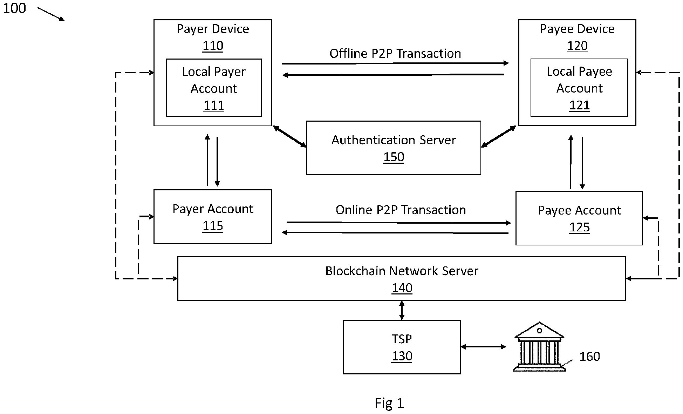

Figure 1 shows a system architecture diagram of a system 100 for effecting a peer-to-peer (P2P) payment. The system 100 includes a payer device 110 and a payee device 120. The payer device 110 is associated with a payer account 115 for use in the P2P payment system 100. The payee device 120 is associated with a payee account 125 for use in the P2P payment system 100. The payer account 115 and the payee account 125 are maintained by a payment network provider. The payment network provider may be any payment network provider such as Mastercard^{®}, for instance. However, it would be understood that the system 100 is applicable with any type of payment network provider, such as, but not limited to Visa^{®}, or American Express^{®}.

The payer device 110 and the payer account 115 are associated with a payer, and the payee device 120 and the payee account 125 are associated with a payee. Within the P2P payment system 100, the payer is able to make a transaction from their payer account 115 to the payee, and into the payee account 125. For example, the P2P payment system may be used by a merchant and customer. In this scenario, the payee device 120 is associated with the merchant, and the payer device 110 is associated with the customer who wishes to pay for goods and/or services offered by the merchant. The P2P payment system 100 may also be used by any entity and in any scenario, such as an individual making a transfer to another individual.

The payer account 115 and the payee account 125 are accessed through their corresponding payer device 110 and payee device 120. However, each of the payer device 110 and payee device 120 store a local version of their respective accounts. The payer device 110 stores a local payer account 111 that corresponds to the payer account 115 maintained by the payment network, and the payee device 120 stores a local payee account 121 that corresponds to the payee account maintained by the payment network.

In this way, the payer account 115 maintained by the payment network is a main account of the payer to be used within the P2P payment system, and the locally stored payer account 111 of the payer device 110 is a sub-account of the main payer account 115. Similarly, the payee account 125 maintained by the payment network is a main account of the payee to be used within the P2P payment system, and the locally stored payee account 121 of the payer device 120 is a sub-account of the main payee account 115. The P2P system 100 includes a blockchain network server 140. The blockchain network server 140 is maintained by the payment network provider. The blockchain network server 140 maintains a blockchain network, which is configured to process and record transactions as a block in a blockchain ledger. Once a block is completed, the block is added to the blockchain, and the transaction record is therefore updated. The blockchain network is a private network that maintains the blockchain ledger as a private distributed ledger.

Both the payer device 110 and payee device 120 at any one time will either be connected to or disconnected from the blockchain network server 140, depending on the P2P transaction that is occurring, as will be explained in detail below.

The payment network provider further maintains a token service provider (TSP) 130 as part of the P2P payment system 100. The TSP 130 is in communication with each of the payer device 110 and payee device 120, as well as the blockchain network server 140. The TSP 130 issues tokens to each of the payer device 110 and payee device 120.

The payer account 115 and the payee account 125, as well as the local payer and payee accounts 111, 121 are configured to hold the tokens, otherwise referred to as value tokens. The value tokens are used within the P2P payment system 100 to make transfers (i.e. payments). The value tokens issued by the TSP 130 correspond to a monetary value. For example, a value token within either payer account 115, 111, or payee account 125, 121 may correspond to a specific amount such as 10p, 50p, £1, £5, or a different value of currency. The value tokens are a virtual representation of funds of a monetary value. The value tokens are only representative of the monetary value, and outside the P2P payment system 100 are not worth said monetary value. Therefore, the value tokens issued by the TSP 130 only have value within the P2P payment system 100 and cannot be used outside of the payment system 100, in for example, a regular peer-to-peer payment or any other type of payment.

The TSP 130 further sets the monetary value that each value token is worth. The value of each value token is determined by the TSP 130 based on a predetermined scaling factor. In the case of a customer and merchant using the P2P payment system 100, the TSP 130 will determine the scaling factor based on a type or category of the merchant. For example, if the merchant is an online gaming platform in which micro-payments are regularly made by users of the game, the TSP 130 will set each token to be worth a small value e.g., 10p, such that an appropriate number of tokens may be used in the transactions between customer (i.e., payer device 110) and merchant (i.e., payee device 120). In the case of an individual transacting with another individual, the TSP 130 may issue value tokens worth a standard amount set for any device using the P2P payments system 100, such as one value token for £1.

The TSP 130 issues the value tokens to be stored in each of the payer account 115 and the payee account 125. The payer device 110 is able to access the payer account 115 in order to use and transfer the value tokens, as well as the payee device 120 being able to access the payer account 125 in order to use and transfer the value tokens. The TSP 130 is further able to send value tokens from within the payer and payee accounts 115, 125 maintained by the payment network provider to the payer and payee accounts 111, 121 held locally on their associated payer and payee devices 110, 120.

The payer device 110 and payee device 120 are also able to exchange value tokens held within their locally stored payer and payee accounts 115, 125 or the payer and payee accounts 115, 125 maintained by the payment network respectively, for funds equal to the monetary value of the value tokens stored within said accounts.

The P2P payment system 100 further includes an issuing bank 160. The issuing bank 160 is a separate entity to the payment network provider. The issuing bank 160 maintains a payer bank account associated with the payer and the payer device 110 and a payee bank account associated with the payee and the payee device 120. The payer and payee bank accounts are separate, external accounts maintained by a different entity (i.e., the issuing bank 160), to that of the payer account 115 and payee account 125 that are maintained by the payment network provider. The payer and payee bank accounts may be maintained by different banks to each other and not just a single issuing bank 160 as shown in Figure 1.

The TSP 130 is in communication with the issuing bank 160. The TSP 130 exchanges funds for value tokens with the issuing bank 160. In this way, as either payer device 110 or payee device 120 request value tokens, the TSP 130 issues value tokens that have been received by the TSP 130 from the issuing bank 160.

The TSP 130, as well as the payer device 110 and payee device 120, are in communication with the blockchain network server 140. This allows for any of the payer device 110, payee device 120 and TSP 130 to send messages to the blockchain network server 140 to record transactions on the blockchain ledger. The issuing bank 160 is not maintained by the payment network provider, as described above, and thus does not have access to the private blockchain ledger maintained by the blockchain network server 140.

The P2P payment system 100 includes an authentication server 150. The authentication server 150 is also maintained by the payment network provider. The authentication server 150 is used to authenticate an identity of the payer device 110 and the payee device 120 in order to ensure security of the P2P payment system 100. Each of the payer device 110 and payee device 120 send an authentication request to the authentication server 150. In response, the authentication server 150 verifies that the payer device 110 and payee device 120 are not unauthenticated devices. If authentication is successful, the authentication server 150 sends an authentication message to both the payer device 110 and payee device 120, indicating that the identity of each device has been verified.

The authentication server 150 is used by the payment network provider 100 that maintains the payment system 100 and TSP 130. However, the issuer 160 may also use the authentication server 150 to authenticate the payer 110 and payee device 120 prior to issuing any tokens.

The authentication messages are sent and received by each of the payer device 110 and payee device 120 at any point when using the P2P payment system 100. For example, the authentication messages may be sent and received before receiving value tokens from the TSP 130, before each transaction occurs between payer device 110 and payee device 120, or before a first transaction occurs, but not before a further number of transactions occur after the first transaction (given as the device has been verified based on an authentication message before the first transaction).

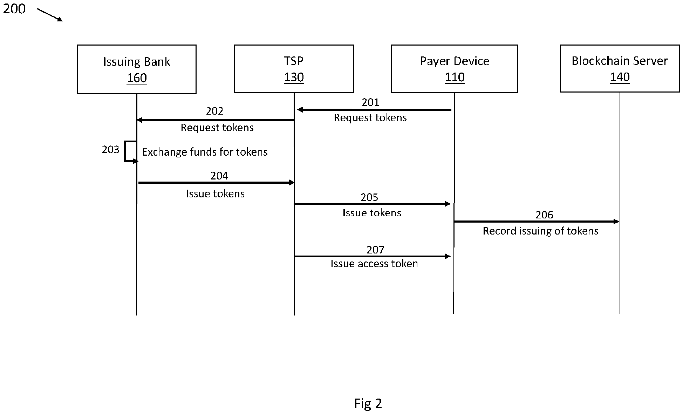

As will be described in detail below, the P2P payment system 100 allows the payer device 110 and payee device 120 to make secure P2P payment transactions to one another using value tokens issued by the TSP 130. Figure 2 shows a message flow diagram of a method 200 for issuing tokens in the peer-to-peer payment system shown in Figure 1.

Figure 2 shows the issuing bank 160, TSP 130 and the blockchain network server 140 of the P2P payment system 100 of Figure 1. By way of example, Figure 2 also shows the payer device 110. However, the message sequence 200 may also be used in issuing value tokens to the payee device 120 and its locally stored payee account 121, as well as the payee account 125 maintained by the payment network provider and does not relate only to the payer device 110.

At step 201, the payer device 110 sends a request to the TSP 130 for one or more value tokens. At step 202, the TSP sends the request for tokens to the issuing bank 160. The issuing bank 160 proceeds to convert funds from the payer's bank account into a corresponding number of value tokens, and at step 204 sends the value tokens to the TSP 130. In converting funds to value tokens, the issuing bank 160 debits the payers bank account held at the issuing bank 160 for the funds.

Once the TSP 130 has received the value tokens, it issues the value tokens to the payer account 125 maintained by the payment network and associated with the payer device 110. At step 205, the TSP 130 sends all or a portion of the value tokens issued to the payer account 115, from the payer account 115 to the payer device 110 to be stored in the payer account 111 held on the payer device 110 within the P2P payment system. In this way, the local payer account 111 stores value tokens on the payer device 110 and the payer account 115 maintained by the payment network provider also stores value tokens. Each of the accounts may store the same number of value tokens or a different number of value tokens.

Alternatively, after receiving the request for value tokens from the payer device 110 at step 201, the TSP 130 may already have value tokens stored, which were previously received from the issuing bank 160. In this case, the request from the payer device 110, at step 201, may not be forwarded to the issuing bank 160 by the TSP 130. Instead, the TSP 130 may itself issue any value tokens it has already stored to the payer device 110 at step 205 to be stored in the payer account 115 and the local payer account 111.

Further, after receiving the request for value tokens from the payer device 110 at step 201, the TSP 130 and issuing bank 160 may alternatively decide to issue the value tokens to the payer accounts 115, 125 as credit. In this case, the request for value tokens is forwarded to the issuing bank 160 by the TSP 130 at step 202, and instead of debiting the payers bank account in order to convert the funds into value tokens (at step 203), the issuing bank 160 issues value tokens instantly to the TSP 130 without debiting the payers bank account. In this case, step 203 is effectively skipped, and the value tokens are sent to the TSP 130, at step 204, and to the payer account 115 and/or the payer device 110 at step 205 to be stored locally on the payer device 110 in its payer account 111, without the payer having paid for the value tokens with funds in their payer bank account. The issuing bank 160 may then, at a later point in time with respect to sending the value tokens, debit the payers bank account for the funds corresponding to the requested number of value tokens when the credit is to be redeemed.

At step 206, the payer device 110 sends a message to the blockchain server 140 to record the receiving of the value tokens as a new block on the blockchain ledger.

In addition to the steps of message sequence 200, the TSP 130 issues an access token 207 to the payer device 110. In the case where the payer device 110 is associated with a customer, and the payee device 120 is associated with a merchant, the message sequence 200 further includes sending an access token to the customer's device (payer device 110).

The access token differs to the value tokens in that it does not represent funds, nor does correspond to a monetary value. The access token is stored in a memory of the payer device 110, once received, and allows the payer device 110 to access a good and/or service offered by the merchant. Therefore, in this case, as the payer device 110 attempts to pay the merchant, the payer device 110 will only be permitted to do so after providing their access token to the merchant. In this way, without the access token, the payer device is unable to transfer any value tokens to the payee device (the merchant) and thus cannot use the P2P payment system 100.

The TSP 130 only sends an access token to the payer device 110 if the payer device 110 is trustworthy and is therefore not associated with fraudulent or malicious activity. The TSP 130 sends the access token to the payer device 110 based on a predetermined factor of the payer associated with the payer device 110. This may be, for example, a reputation of the payer previously using the P2P payment system 100, or otherwise known to the payment network provider. This ensures security to the merchant, as only reputable payers are able to access and use the P2P payment system 100 in purchasing goods and/or services.

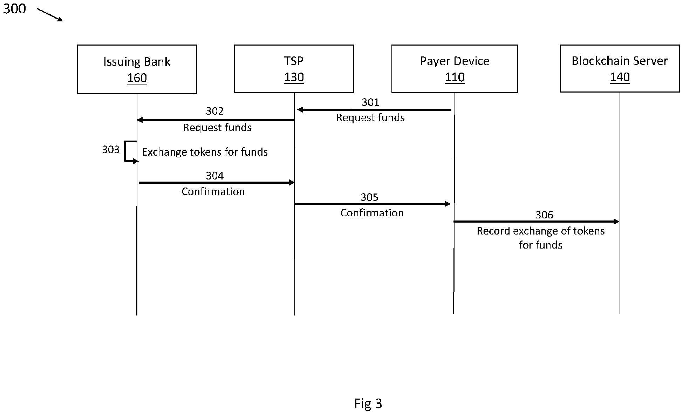

Figure 3 shows a message flow diagram of a message sequence 300 for converting tokens into funds within the peer-to-peer payment system shown in Figure 1. The message sequence 300 includes the entities of issuing bank 160, the TSP 130 and the blockchain network server 140 of the P2P payment system 100, as shown in Figure 1. By way of example, Figure 3 also shows the payer device 110. However, the message sequence 300 may also be used in converting value tokens of the payee device 120 and does not relate only to the payer device 110.

The message sequence 300 is used by the P2P payment system 100 when the payer wishes to convert any remaining value tokens in their payer accounts 115, 111 back into the corresponding funds. At step 301, the payer device 110 sends a request to the TSP 130 to covert one or more value tokens into funds. If the value tokens requested to be converted are from within the local payer account 111, the request message at step 301 further includes the one or more value tokens from the local payer account 111 in which the payer wishes to convert.

At step 302, the TSP sends the request message and value tokens to the issuing bank 160. If the value tokens to be converted are from the payer account 115 maintained by the payment network, the TSP 130 removes the value tokens from the payer account 115 and sends these value tokens with the request message at step 302. If the value tokens to be converted are from the local payer account 111, the TSP 130 sends the value tokens received from the payer device 110 at step 301, with the request message of step 302. The issuing bank 160 proceeds to convert the value tokens into funds and deposits said funds into the payer bank account maintained by the issuing bank 160.

At step 304, the issuing bank 160 sends a confirmation message to the TSP 130 indicating successful conversion of the value tokens into their corresponding funds, and at step 305, the TSP 130 forwards this message to the payer device 110. Once the payer device 110 has received the confirmation message, at step 306, the payer device 110 sends a message to the blockchain server 140 to record the conversion of the value tokens into funds as a block on the blockchain ledger.

Therefore, as shown in Figures 1 and 2, the payer device 110 and payee device 120 are able to receive value tokens corresponding to monetary value and are further able to convert the value tokens back into the monetary value by communicating with the TSP 130. Each issuing of value tokens and exchange of value tokens to funds is also recorded on the blockchain ledger.

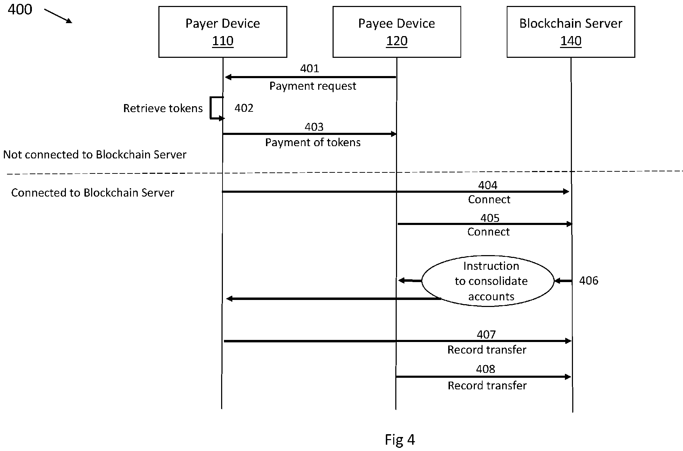

Figure 4 shows a message flow diagram of a message sequence 400 for effecting an offline payment using the peer-to-peer payment system shown in Figure 1. The offline payment effected by message sequence 400 is directly between the payer device 110 and the payee device 120, as shown in Figures 1 to 3. The term offline payment is used to indicate that the P2P transfer occurs whilst the payer device 110 and payee device 120 are offline from the blockchain network and are therefore not connected to (i.e. do not have an active connection with) the blockchain network server 140. Only at a later point in time is the payer device 110 and payee device 120 connected to the blockchain network server 140.

As described in relation to Figures 1 to 3, both the payer account 111 held locally on the payer device 110, and the payer account 115 maintained by the payment network store the value tokens issued by the TSP 130. However, given as the payer device 110 is not connected to the blockchain network server 140, any transactions occurring offline directly between the payer device 110 and payee device 120 only use the value tokens held in the payer account 111 stored on the payer device 110, or the value tokens held in the payee account 121 stored on the payee device 120. The offline P2P transaction, as described below, between the payer device 110 and payee device 120 involves the transfer of one or more of the value tokens from the payer device 110 to the payee device 120, to be stored in the payee account 115 held locally on the payee device 120.

At step 401, the payee device 120 sends a payment request to the payer device 110. This may be, for example, a merchant as the payee device 120 initiating a transfer in which a customer (as the payer device 110) is to pay the merchant for goods and/or services. The payment request also indicates a transaction amount to be paid by the payer device 110.

In response to receiving the payment request, at step 402, the payer device 110 retrieves, from the payer account 111 stored on the payer device 110, one or more tokens corresponding to a monetary value of the transaction amount. By way of example, the following steps will be described in relation to a single value token corresponding to the monetary value of the transaction amount. However, any number of value tokens may be retrieved by the payer device 110, depending on the value of each token and the transaction amount received at step 401.

At step 403, the payer device 110 proceeds to send a message including the value token equal to the transaction amount to the payee device 120. The payment request at step 401 and the message including the value token sent at step 402, are both sent directly between the payer device 110 and payee device 120. This may be, for example, through using communication methods such as near field communications (NFC) or Bluetooth. The messages at steps 401 and 403 may also be sent using a WI-FI network or any other type of network, provided that the payer device 110 and payee device are offline and not connected to the blockchain server 140.

Further transactions may also occur between the payer device 110 and the payee device 120, whilst the two devices 110, 120 are not connected to the blockchain server 140. In this case the same steps of 401 to 403 will occur, but with second (i.e. different) payment request and a second (i.e. different) payment of value tokens.

The payee device 120 sends a further payment request message to the payer device 110 indicating a further transaction amount. The further transaction amount may be the same amount or different amount to the initial payment amount included in the first payment request message (at step 401).

The payer device 110 then proceeds to retrieve a number of value tokens that equals the further transaction amount. If the payer account 111 does not have a sufficient number of value tokens after making the first payment of tokens (at step 403), the payer device 115 will have to connect to the TSP 130 and the blockchain network server 140, to exchange more funds for further value tokens, using the message sequence 200 shown in Figure 2.

Assuming, the payer account 111 contains a sufficient number of value tokens, the payer device 110 then sends a message including the further value token or tokens that equals the further transaction amount to the payee device 120. As explained above, these messages are sent directly between the payer device 110 and the payee device 120 via NFC or Bluetooth, for example.

Multiple other transaction may also be made between the payer device 110 and the payee device 120 before the payer device connects to the blockchain network sever 140. For example, the payee device 120 is also able to transfer value tokens to the payer device 110 using the same messages shown in steps 401 to 403, but with the payer device 110 sending the payment request and the payee device 120 sending the value tokens in response i.e., the payer device 110 may act as the payee and the payee device 120 may act as the payer. Any other number of offline P2P transactions, as shown in steps 401 to 403, may also occur between the payer device 110 and another device, as well as the payee device 120 and any other device. The payer device 110 and the payee device 120 are not restricted to only performing transactions between one another, other devices (not shown) associated with accounts maintained by the payment network provider are also able to use the P2P payment system 100 in making offline P2P transactions with value tokens.

At a later point in time to the transfer of the value token from the payer device 110 to the payee device 120 at step 3, steps 404 and 405 are then performed where, both the payer device 110 and payee device 120, respectively, connect to the blockchain network server 140.

At step 406, the blockchain network server 140 sends an instruction to the payee device 120 and payer device 110 requesting them to consolidate their respective payee and payer accounts 111, 121 with the payer and payee accounts 115, 125 maintained by the payment network. This ensures that after performing the offline transaction(s) as shown in steps 401 to 403, the payment network provider is able to record the number of value tokens remaining in each of the local payer and payee accounts 111, 121.

The instruction sent at step 406 includes an instruction to record on the blockchain ledger any transactions that have occurred and an instruction to record a balance of tokens held within the local accounts 111, 121 at the point in time of connecting to the blockchain network server 140.

At step 407, the payer device 110 sends a message to the blockchain server 140 to record the sending of the value token at step 403 as a block on the blockchain ledger. This message further includes an indication of the balance of value tokens in the local payer account 111 after the transaction at step 403.

At step 408, the payee device 120 sends a message to the blockchain server 140 to record the receiving of the value token at step 403 as a block on the blockchain ledger. This message further includes an indication of the balance of value tokens in the local payee account 121 after the transaction at step 403.

The point at which the instruction to consolidate the accounts 111, 121 is sent to the payer and payee devices 110, 120 is determined by the blockchain network server 140. For example, this may be after a predetermined amount of time after the payer and payee devices 110, 120 have connected to the blockchain network server 140 at steps 404 and 405. Alternatively, the payer device 110 and payee device 120 themselves may send the messages at steps 407 and 408 in order to record any transactions that have occurred without having to receive the instruction from the blockchain network server 140 at step 406. For example, the payer and payee devices 110, 120 may send the messages at steps 407 and 408 instantaneously after connecting to the blockchain network server 140, or after each device 110, 120 has participated in a predetermined number of offline transactions.

In the case where further transaction have occurred after steps 401 to 403, the messages sent at steps 407 and 408 will also include a message to record the further transactions of value tokens. The indication of the balance of value tokens in each locally stored account 111, 121 will also reflect any of the further transactions that have occurred. The blockchain ledger is therefore fully updated based on the offline transaction(s) that have occurred. By receiving these details from both the payee device 120 and the payer device 110 verification that the transactions match can be achieved. If there are any discrepancies with the detail of the transactions received from both devices these transactions will not be recorded on the blockchain ledger and a query message sent back to the payer device 110 and payee device 120.

Further, in the case where the payer is a customer and the payee is a merchant, in addition to the steps shown in Figure 4, before receiving the payment request from the payee device at step 401 the payer device 110 sends an access token to the payee device 120. This is the access token issued to the customer device (i.e., payer device 110) as shown in Figure 2. The merchant device (i.e., payee device 120) verifies the received access token. If successfully verified, the merchant device 120 proceeds to send the payment request message at step 401 to the customer device 110, thereby allowing the customer device 110 to access and purchase goods and/or services of the merchant. The method then proceeds as shown in Figure 4.

In this way, the payer device 110 and payee device 120 are able to use the P2P payment system 100 to make efficient and secure P2P transfers, where only at a later point in time after the transactions have been completed, the accounts are consolidated with the blockchain ledger of the blockchain network server 140.

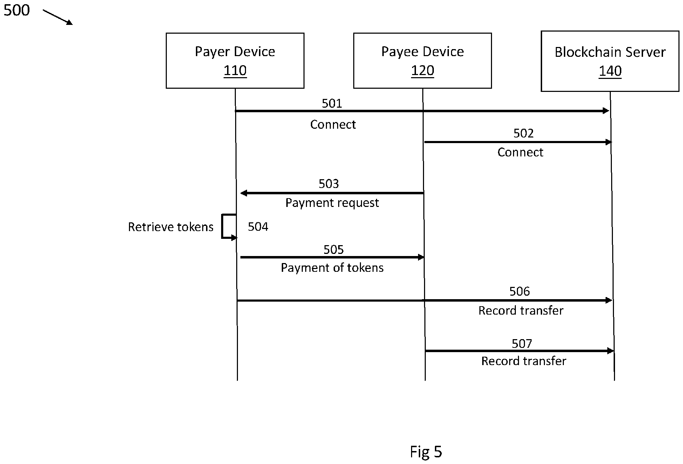

The P2P payment system 100 may also be used for performing online P2P transactions, whilst the devices 110, 120 are connected to the blockchain network server 140. Figure 5 shows a message flow diagram of a message sequence 500 for effecting an online payment using the peer-to-peer payment system shown in Figure 1.

The online payment effected by message sequence 500 is directly between the payer device 110 and the payee device 120, as shown in Figures 1 to 3. The term online payment is used to indicate that the P2P transfer occurs whilst the payer device 110 and payee device 120 are online and connected to the blockchain network server 140 at the time of the transaction such that the transfer can be recorded immediately on the blockchain ledger after the transfer has been made. The following steps occur as a further transaction in addition to the offline transaction of Figure 4.

At step 501, the payer device 110 connects to the blockchain network server 140. At step 502, the payee device 120 connects to the blockchain network server 140.

At step 503, the payee device 120 sends a payment request message to the payer device 120 indicating a transaction amount. At step 504, the payer device 110 retrieves one or more value tokens equal to the transaction amount from the payer account 115 maintained by the payment network. Given as the current transaction is occurring online, the payer account 115 is able to be used rather than the local payer account 111 stored only on the payer device 110. At step 505, the payer device 110 authorises the transfer of the value tokens equal to the transaction amount from the payer account 115 to the payee device 120 to be stored in the payee account 125 maintained by the payment network. The steps 503 to 505 similarly correspond to the steps 401 to 403 of Figure 4, only that the payer device 110 and payee device 120 are already connected to the blockchain network server 140 and the payer and payee accounts 115, 125 maintained by the payment network are used in the online transaction of Figure 5.

Given as both the payer device 110 and the payee device 120 are already connected to the blockchain network server 140 prior to making the transaction of value tokens, there is no need to connect to the blockchain network server 140 after making the transaction. Therefore, at step 506, the payer device 110 instantly after sending the value tokens to the payee device 120, sends a message to the blockchain network server 140 to record the sending of the value tokens as a block on the blockchain ledger.

Similarly, at step 507, the payee device 120 instantly after receiving the value tokens from the payer device 110, sends a message to the blockchain network server 140 to record the receiving of the value tokens as a block on the blockchain ledger.

Further, in the case where the payer is a customer and the payee is a merchant, in addition to the steps shown in Figure 5, before receiving the payment request from the payee device at step 504, the payer device 110 sends an access token to the payee device 120. This is the access token issued to the customer device (i.e., payer device 110) as shown in Figure 2. The merchant device (i.e., payee device 120) verifies the received access token. If successfully verified, the merchant device 120 proceeds to send the payment request message at step 503 to the customer device 110, thereby allowing the customer device 110 to access and purchase goods and/or services of the merchant. The message sequence then proceeds as shown in Figure 5.

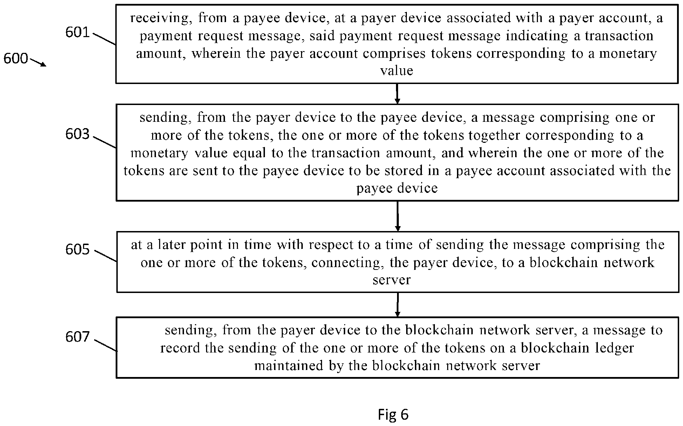

Figure 6 shows a flow diagram of a computer implemented method 600 for of effecting peer to peer payments between a payer account and a payee account. The entity performing each of the method steps 600 is the payer device 110 as shown in Figures 1 to 5.

At step 601 the method involves, receiving, from a payee device, at a payer device associated with a payer account, a payment request message, said payment request message indicating a transaction amount, wherein the payer account comprises tokens corresponding to a monetary value.

At step 603 the method involves, sending, from the payer device to the payee device, a message comprising one or more of the tokens, the one or more of the tokens together corresponding to a monetary value equal to the transaction amount, and wherein the one or more of the tokens are sent to the payee device to be stored in a payee account associated with the payee device.

At step 605 the method involves, at a later point in time with respect to a time of sending the message comprising the one or more of the tokens, connecting, the payer device, to a blockchain network server.

At step 607 the method involves, sending, from the payer device to the blockchain network server, a message to record the sending of the one or more of the tokens on a blockchain ledger maintained by the blockchain network server.

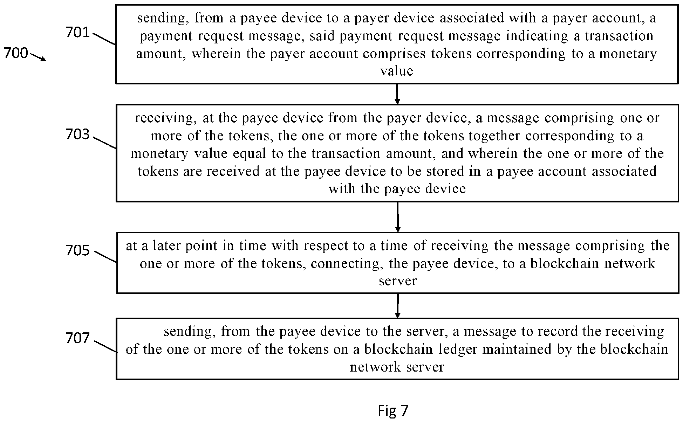

Figure 7 shows a flow diagram of a computer implemented method 700 of effecting peer to peer payments between a payer account and a payee account. The entity performing each of the method steps 700 is the payee device 110 as shown in Figures 1 to 5.

At step 701 the method involves, sending, from a payee device to a payer device associated with a payer account, a payment request message, said payment request message indicating a transaction amount, wherein the payer account comprises tokens corresponding to a monetary value.

At step 703 the method involves, receiving, at the payee device from the payer device, a message comprising one or more of the tokens, the one or more of the tokens together corresponding to a monetary value equal to the transaction amount, and wherein the one or more of the tokens are received at the payee device to be stored in a payee account associated with the payee device.

At step 705 the method involves, at a later point in time with respect to a time of receiving the message comprising the one or more of the tokens, connecting, the payee device, to a blockchain network server.

At step 707 the method involves, sending, from the payee device to the server, a message to record the receiving of the one or more of the tokens on a blockchain ledger maintained by the blockchain network server.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

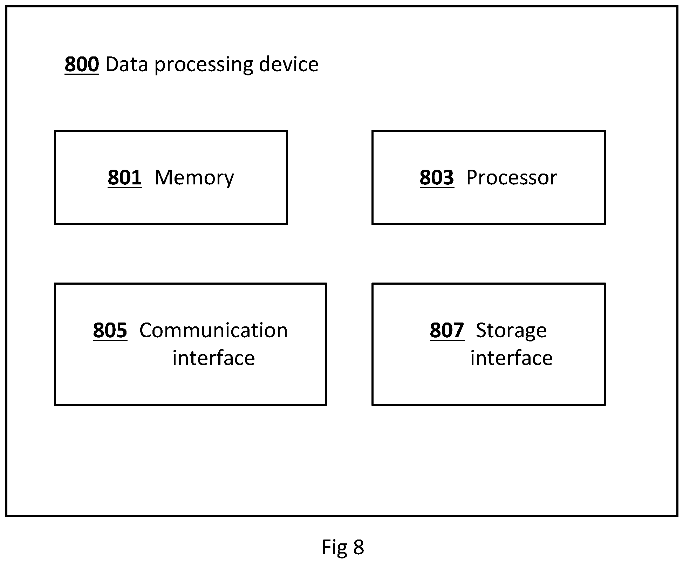

Similarly, any steps of any of the methods described herein may be performed by data processing devices. By way of example, Figure 8 shows, in schematic form, a data processing device 800 that is suitable for performing the functions of the payer device 110, payee device 120, TSP 130, authentication server 150, blockchain network server 140 or any other entity. The data processing device 800 may automatically perform any of the methods described herein.

Data processing device 800 includes a processor 803 for executing instructions. Instructions may be stored in a memory 801. Processor 803 may include one or more processing units (e.g., in a multi-core configuration) for executing instructions. The instructions may be executed within a variety of different operating systems on the data processing device 800, such as UNIX, LINUX, Microsoft Windows^{®}, etc. More specifically, the instructions may cause various data manipulations on data stored in memory 801 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 803 is operatively coupled to a communication interface 805 such that data processing device 800 can communicate with a remote device, such as another data processing device of the system. For example, communication interface 805 may receive communications from another member of the system.

Processor 803 may also be communicatively coupled to a storage device such as a database, depending on the function of data processing device 800 within the context of the system. The storage device is any computer-operated hardware suitable for storing and/or retrieving data, where in the case of a secure storage medium the data is stored and retrieved securely.

The storage database may, for example, be external to data processing device 800 and located remotely. Alternatively, it can be integrated in data processing device 800. For example, data processing device 800 may include memory 801 as one or more hard disk drives acting as a storage database. Alternatively, where the storage database is external to data processing device 800, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 803 can be operatively coupled to the storage device (storage database) via a storage interface 807. Storage interface 807 is any component capable of providing processor 803 with access to the storage device. Storage interface 807 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 803 with access to the storage device.

Memory 801 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

Although it is shown in Figure 2, that at step 206, the payer device 110 sends a message to the blockchain server 140 to record the receiving of the value tokens as a new block on the blockchain ledger, in other arrangements the TSP 130 may instead send the message to the blockchain server 140 to record the issuing of the value tokens, and not the payer device 110.

Although it is shown in Figure 3, that at step 306, the payer device 110 sends a message to the blockchain server 140 to record the conversion of the value tokens into funds as a block on the blockchain ledger, in other arrangements the TSP 130 may instead send the message to the blockchain server 140 to record the conversion of value tokens into funds, and not the payer device 110.

The exchange of funds into value tokens and vice versa as shown in Figures 2 and 3 respectively may occur at any point during the transaction steps of Figure 4 or Figure 5, provided that at the time of the transfer, the payer account 115 stores sufficient value tokens to transfer to the payee device 110 an amount of value tokens equal to the transaction amount. Otherwise, further value tokens will be required, and the payer device 110 will perform the steps as shown in Figure 2, prior to sending the one or more value tokens to the payee device 120 (at steps 403 and 505).

Although it is described that the message sequence of Figure 5 is in addition to Figure 4, and relates to a further transaction, in other arrangements the online transaction as shown in Figure 5 may occur instead of the offline transaction of Figure 4, depending on whether the payer device 110 is offline or online from the blockchain network server 140.

Although it is stated that the blockchain network server 140 is maintained by the payment network provider in other arrangements it need not necessarily be so. For instance, the blockchain network server may instead be maintained by an intermediary third party.

## Claims

1. A computer implemented method of effecting peer to peer payments between a payer account and a payee account, the method comprising:
receiving, from a payee device, at a payer device associated with a payer account, a payment request message, said payment request message indicating a transaction amount, wherein the payer account comprises tokens corresponding to a monetary value;
sending, from the payer device to the payee device, a message comprising one or more of the tokens, the one or more of the tokens together corresponding to a monetary value equal to the transaction amount, and wherein the one or more of the tokens are sent to the payee device to be stored in a payee account associated with the payee device;
at a later point in time with respect to a time of sending the message comprising the one or more of the tokens, connecting, the payer device, to a blockchain network server; and
sending, from the payer device to the blockchain network server, a message to record the sending of the one or more of the tokens on a blockchain ledger maintained by the blockchain network server.

2. The computer implemented method according to claim 1, wherein the tokens are a plurality of tokens and the method further comprising:
prior to connecting the payer device to the server:
receiving, at the payer device from the payee device, a further payment request including a further transaction amount; and
sending, from the payer device to the payee device, a further message comprising a further one or more of the tokens, the further one or more of the tokens together corresponding to a monetary value equal to the further transaction amount, and wherein the further one or more of the tokens are sent to the payee device to be stored in the payee account; and
after connecting the payer device to the server:
sending, from the payer device to the blockchain network server, a message to record the sending of the further one or more of the tokens on the blockchain ledger maintained by the blockchain network server.

3. The computer implemented method according to any preceding claim, the method further comprising:
determining, at the payer device, a balance of the tokens in the payer account after the sending, from the payer device to the payee device, of the message comprising the one or more of the tokens; and
after connecting the payer device to the server:
sending, from the payer device to the blockchain network server, a message to record, on the blockchain ledger maintained by the blockchain network server, the balance of the tokens in the payer account after the sending of the message comprising the one or more of the tokens.

4. The computer implemented method according to any preceding claim, the method further comprising:
sending, from the payer device to a token service provider, a request for the tokens corresponding to the monetary value;
receiving, at the payer device from the token service provider, the tokens corresponding to the monetary value, wherein the tokens are deposited into the payer account; and
sending, from the payer device to the blockchain network server, a message to record the receiving of the tokens from the token service provider on the blockchain ledger maintained by the blockchain network server.

5. The computer implemented method according to claim 4, wherein the request for the tokens corresponding to the monetary value is configured to be sent to an issuing bank associated with the payer device, and wherein the tokens received at the payer device from the token service provider are received by the token service provider from the issuing bank.

6. The computer implemented method according to any preceding claim, the method further comprising
sending, from the payer device to a token service provider, a request to convert one or more of the tokens into their corresponding monetary value, and a message comprising the one or more of the tokens to be converted into their corresponding monetary value; and
receiving, at the payer device from the token service provider, funds for depositing into a payer bank account maintained by an issuing bank, wherein an amount of the currency received is equal to the monetary value of the one or more of the tokens sent to the token service provider to be converted.

7. The computer implemented method according to claim 6, wherein the request to convert the one or more of the tokens into their corresponding monetary value is configured to be sent to an issuing bank associated with the payer device, and wherein the currency received at the payer device by the token service provider is received by the token service provider from the issuing bank.

8. The computer implemented method according to any preceding claim, the method further comprising:
receiving, at the payer device, an authentication message, wherein the authentication message verifies an identity of the payer device.

9. The computer implemented method according to any preceding claim, wherein the tokens are a plurality of tokens, the payer account is a first payer account stored on the payer device, the payee account is a first payee account stored on the payee device, and the method further comprising:
connecting, the payer device, to the blockchain network server;
receiving, at the payer device from the payee device, an additional payment request message, said additional payment request message indicating an additional transaction amount;
sending, from the payer device to the payee device, an additional message comprising an additional one or more of the tokens, the additional one or more of the tokens together corresponding to a monetary value equal to the additional transaction amount, wherein the additional one or more of the tokens are sent from a second payer account stored by a payment network provider to the payee device, to be stored in a second payee account stored by the payment network provider, and wherein the second payer account is associated with the first payer account and the second payee account is associated with the first payee account; and
sending, from the payer device to the blockchain network server, a message to record the sending of the additional one or more of the tokens on the blockchain ledger maintained by the blockchain network server.

10. The computer implemented method according to any preceding claim, wherein the payee device is associated with a merchant and the payer device is associated with a customer of the merchant.

11. The computer implemented method according to claim 11, wherein the monetary value of the tokens in the payer account is based on a predetermined scaling factor.

12. A computer implemented method of effecting peer to peer payments between a payer account and a payee account, the method comprising:
sending, from a payee device to a payer device associated with a payer account, a payment request message, said payment request message indicating a transaction amount, wherein the payer account comprises tokens corresponding to a monetary value;
receiving, at the payee device from the payer device, a message comprising one or more of the tokens, the one or more of the tokens together corresponding to a monetary value equal to the transaction amount, and wherein the one or more of the tokens are received at the payee device to be stored in a payee account associated with the payee device;
at a later point in time with respect to a time of receiving the message comprising the one or more of the tokens, connecting, the payee device, to a blockchain network server; and
sending, from the payee device to the server, a message to record the receiving of the one or more of the tokens on a blockchain ledger maintained by the blockchain network server.

13. A payer device for effecting peer to peer payments between a payer account and a payee account, the payer device comprising a processor configured to:
receive, from a payee device, a payment request message, said payment request message indicating a transaction amount, wherein a payer account associated with the payer device comprises tokens corresponding to a monetary value;
send, to the payee device, a message comprising one or more of the tokens, the one or more of the tokens together corresponding to a monetary value equal to the transaction amount, and wherein the one or more of the tokens are sent to the payee device to be stored in a payee account associated with the payee device;
at a later point in time with respect to a time of sending the message comprising the one or more of the tokens, connect to a blockchain network server; and
send, to the server, a message to record the sending of the one or more of the tokens on a blockchain ledger maintained by the blockchain network server.

14. A payee device for effecting peer to peer payments between a payer account and a payee account, the payee device comprising a processor configured to:
send, to a payer device associated with a payer account, a payment request message, said payment request message indicating a transaction amount, wherein the payer account comprises tokens corresponding to a monetary value;
receive, from the payer device, a message comprising one or more of the tokens, the one or more of the tokens together corresponding to a monetary value equal to the transaction amount, and wherein the one or more of the tokens are received at the payee device to be stored in a payee account associated with the payee device;
at a later point in time with respect to a time of receiving the message comprising the one or more of the tokens, connect to a blockchain network server; and
send, to the server, a message to record the receiving of the one or more of the tokens on a blockchain ledger maintained by the blockchain network server.

15. A system for effecting peer to peer payments between a payer account and a payee account, the system comprising the payer device of claim 13 and the payee device of claim 14 and configured to perform the steps of any of claims 1 to 12.
